# EUROPÄISCHE PATENTSCHRIFT

(11) **EP 2 376 735 B1**
(45) Veröffentlichungstag und Bekanntmachung des Hinweises auf die Patenterteilung: **30.09.2020**
(21) Anmeldenummer: 09760721.2
(22) Anmeldetag: 06.11.2009
(51) Int. Cl.: E05F 11/38

(54) **FENSTERHEBERANORDNUNG FÜR EIN KRAFTFAHRZEUG**
VEHICLE WINDOW REGULATOR
LÈVE-VITRE DE VÉHICULE

(30) Priorität: 12.12.2008 DE 102008062059
(43) Veröffentlichungstag der Anmeldung: 19.10.2011
(73) Patentinhaber: Audi AG, 85045 Ingolstadt (DE)
(72) Erfinder: GASSMANN, Lothar, 74177 Bad Friedrichshall (DE); HENEKA, Rolf, 74177 Bad Friedrichshall (DE)
(86) Internationale Anmeldenummer: PCT/EP2009/007952
(87) Internationale Veröffentlichungsnummer: WO 2010/066322

(56) Entgegenhaltungen:
- DE-A1- 4 440 170
- DE-A1- 10 039 841
- DE-A1- 19 653 046
- DE-A1-102004 005 862
- GB-A- 2 099 897

## Beschreibung

Die Erfindung betrifft eine Fensterheberanordnung für ein Kraftfahrzeug, insbesondere eine Mitnehmeranordnung einer Verstellvorrichtung für die Fensterscheibe eines Kraftfahrzeugs und ein Verfahren zur Herstellung einer solchen Fensterheberanordnung.

Derartige Fensterheberanordnungen werden in Kraftfahrzeugen dazu verwendet, um eine verstellbare Fensterscheibe ein- und auszufahren.

Die DE 100 39 841 A1 zeigt eine Vorrichtung zum Verbinden einer ein- und ausfahrbaren Kraftfahrzeug-Fensterscheibe mit einem Anschlussteil zur Aufnahme der Fensterscheibe und einen mit einem Antriebselement verbundenen Mitnehmer, wobei das Anschlussteil ein zungenartiges Befestigungsteil aufweist, das in eine von einem Montageelement und dem Mitnehmer gebildete Einführöffnung einschiebbar und über eine Gewindeschraube als Befestigungsmittel mit dem Mitnehmer verbunden ist. Das Montagelement ist u-förmig ausgebildet mit einem ersten und einem zweiten Schenkel, wobei der zweite Schenkel eine Einlaufschräge aufweist, die den Kopf der Gewindeschraube führt und somit das Anschlussteil zum Mitnehmer ausrichtet.

Nachteilig an der beschriebenen Vorrichtung ist der hohe Aufwand bei der Herstellung und der Montage aufgrund der Vielzahl der verwendeten Bauteile. Zudem ist die Gewindeschraube für die Nutzung der Einlaufschräge als Positionierungshilfe unabdingbar. Aufgrund dessen besteht keine Verwendungsmöglichkeit bei Mitnehmern, die ein Schnellverschlusssystem, insbesondere durch Verrastungselemente, aufweisen.

Die DE 10 2004 005 862 A1 zeigt eine Vorrichtung zum Verbinden einer Fensterscheibe mit einem Verstellmechanismus eines Kraftfahrzeug-Fensterhebers, aufweisend einen Mitnehmer bestehend aus Grundkörper und Klemmelement mit einander gegenüberliegenden Klemmflächen, um die zwischen den Klemmflächen angeordnete Fensterscheibe einzuklemmen. Der Grundkörper weist dabei Anlagebereiche auf, an deren Außenflächen das Klemmelement anliegt, wenn die Fensterscheibe geklemmt ist. Die Anlagebereiche und die Außenflächen sind derart ausgebildet, dass sich die Klemmflächen beim Einführen des Klemmeelements zwischen die Anlagebereiche des Grundkörpers, quer zur Ebene der Fensterscheibe, aufeinander zu bewegen und gegen die Fensterscheibe gedrückt werden. Die Klemmflächen weisen eine Mehrzahl von vorstehenden Rippen und Stegen auf, die zur Anlage an die Anlagebereiche des Grundkörpers kommen.

Die gezeigte Vorrichtung hat jedoch zum Nachteil, dass eine schnelle und dennoch passgenaue Montage der Fensterscheibe in einem Türrahmen des Kraftfahrzeugs nicht möglich ist, da ein störender Versatz des Klemmeelements in Längsrichtung des Grundkörpers nur schwer vermeidbar ist. Vielmehr muss nach dem Einführen des Klemmeelements in den Grundkörper die korrekte Ausrichtung der beiden Elemente zueinander hergestellt werden, was einen erhöhten Zeitaufwand bei der Montage zur Folge hat und aufgrund der einsetzenden Klemmwirkung des Formschlusses nur unter erhöhtem Kraftaufwand zu bewerkstelligen ist.

Die gattungsbildende DE 196 53 046 A1 offenbart eine Fensterheberanordnung für ein Kraftfahrzeug mit einer Mitnehmeranordnung umfassend einen Scheibenadapter, der einen u-förmigen Halteabschnitt aufweist, der an der Fensterscheibe befestigt ist und einen flächigen Klemmabschnitt der eine L-förmige Nut aufweist, und einen Führungsschlitten, der einen Zapfen aufweist, der in der L-förmigen Nut zuerst von unten eingeführt wird und dann seitlich geführt wird bis der Führungsschlitten mit dem Klemmabschnitt verrastet.
Nachteilig hierbei ist jedoch, dass beim Aufschieben des Führungsschlittens auf den Scheibenadapter seitliche Kräfte wirken, die ein seitliches Verrutschen des Scheibenadapters bewirken können. Auch wird durch die flächige Nut im Klemmabschnitt die Steifigkeit des Scheibenadapters verringert, da im Bereich der Nut die Wandstärke geringer ist.

Die DE 44 40 170 A1 offenbart eine Vorrichtung zur Befestigung einer Fensterscheibe eines Kraftfahrzeugs an der Führungsvorrichtung eines Fensterhebers, bestehend aus Halteschenkeln, die zu beiden Seiten des unteren Bereichs der Fensterscheibe angeordnet sind und von denen wenigstens ein Halteschenkel einen Stift trägt, der in ein vorgesehenes Scheibenloch eingreifen kann. Dazu sind zumindest die einer Seite der Fensterscheibe zugeordneten Halteschenkel federelastisch ausgebildet. Zur Erleichterung der Montage ist ein im Bereich des Scheibenloches befestigter Scheibenadapter vorgesehen, der zwei Führungsflächen aufweist, die in Montagerichtung einen sich bis auf die Weite der Einschnappöffnung verjüngenden Führungsspalt bilden.
Nachteilig hierbei ist jedoch, dass kein Toleranzausgleich möglich ist, da sowohl der Scheibenadapter, als auch der Führungsschlitten am Loch der Fensterscheibe befestigt werden müssen. Ein weiterer Nachteil besteht darin, dass die Scheibe ein Loch aufweisen muss.

Die GB 2 099 897 A offenbart eine Fensterhebervorrichtung, bei dem der Scheibenadapter und die Führungsvorrichtung von einer Klammer umgriffen werden. An der Klammer befindet sich eine Befestigungsvorrichtung, die den Scheibenadapter und die Führungsvorrichtung an der Klammer fixiert.
Nachteilig hierbei ist jedoch das Gewicht und die aufwändige Montage

Aufgabe der vorliegenden Erfindung ist es daher eine universell einsetzbare Fensterheberanordnung für ein Kraftfahrzeug bereitzustellen, die mit möglichst wenigen und einfachen Bauteilen eine schnelle und präzise Ausrichtung der Fensterscheibe in Bezug auf den Verstellmechanismus und den Toleranzaausgleich ermöglicht.

Diese Aufgabe wird durch die Merkmale des Patentanspruchs 1 oder 14 gelöst.

Fensterheberanordnung für ein Kraftfahrzeug, aufweisend eine verstellbare Fensterscheibe, eine Verstellvorrichtung mit einem Antrieb und einer Mitnehmeranordnung, umfassend einen Scheibenadapter und einen Führungsschlitten, wobei der Scheibenadapter einen oberen u-förmigen Halteabschnitt zur Fixierung der Fensterscheibe, sowie einen unteren flächigen Klemmabschnitt aufweist und an einem Randbereich der Fensterscheibe angeordnet ist, und wobei der Führungsschlitten an der Verstellvorrichtung angeordnet ist und einen Sitz aufweist, der mit dem Klemmabschnitt des Scheibenadapters in Eingriff gebracht wird und der sich aus einem Führungsschenkel und dem damit einseitig verbundenen gegenüberliegenden Befestigungsschenkel ergibt, wobei der Klemmabschnitt einen durch Erhebungen gebildeten Einführkanal aufweist und der Führungsschenkel mit seinen Außenkanten im Einführkanal angeordnet ist, wodurch beim Einführen des Klemmabschnitts des Scheibenadapters in den Sitz des Führungsschlittens eine Soll-Ausrichtung des Scheibenadapters zum Führungsschlitten erreicht wird und der Klemmabschnitt des Scheibenadapters an dem Führungsschenkel und dem Befestigungsschenkel anliegt.

Indem der Einführkanal durch mindestens eine Erhebung im Klemmabschnitt des Scheibenadapters gebildet wird, ist es möglich, dass der Einführkanal den Scheibenadapter beim Einführen in den Sitz des Führungsschlittens schnell und präzise in die gewünschte Soll-Ausrichtung relativ zum Führungsschlitten verbringt. Da der Führungsschlitten in der Verstellvorrichtung auf einer definierten Bahn geführt wird und der Scheibenadapter mit seinem Halteabschnitt an festgelegten Stellen in den Randbereich der verstellbaren Fensterscheibe eingreift, ist weiterhin eine Soll-Ausrichtung der Fensterscheibe relativ zur Verstellvorrichtung gewährleistet. Dies ist besonders wichtig, da sich die verstellbare Fensterscheibe bei einem Verstellvorgang in einem Rahmen, insbesondere in durch einen Rahmen gebildeten Führungsschienen, verschiebt. Ein Versatz der Fensterscheibe zur Verstellvorrichtung, die wiederum an festgelegten Montagepunkten mit der Karosserie des Kraftfahrzeugs verbunden ist, hätte zur Folge, dass die Fensterscheibe in den Führungsschienen stecken bleiben kann und/oder die geforderte Dichtigkeit des Übergangs zwischen Rahmen und Fensterscheibe nicht erreicht wird. Weiterhin kann eine Veränderung der Soll-Ausrichtung einfach und kostengünstig dadurch erreicht werden, indem Scheibenadapter mit verschiedenartig ausgeformten Einführkanälen bereitgestellt werden. Dadurch ist keine aufwändige Anpassung des Führungsschlittens notwendig, da die veränderte Soll-Ausrichtung lediglich durch einen geänderten Scheibenadapter erreicht wird.
Der Sitz des Führungsschlittens wird durch zwei gegenüberliegende Schenkel gebildet, die einseitig miteinander verbunden sind. Der daraus resultierende u-förmige Sitz eignet sich besonders gut für eine feste und sichere Aufnahme des Klemmabschnitts des Scheibenadapters. Hierbei ist ein Schenkel als Führungsschenkel und der gegenüberliegende Schenkel als Befestigungsschenkel ausgebildet.
Eine Führung des Führungsschenkels mit seinen Aussenkanten entlang der Erhebung des Einführkanals hat zum Vorteil, dass diese Art der Führung sehr einfach, robust und wenig fehleranfällig ist. Da der Klemmabschnitt des Scheibenadapters an dem Führungsschenkel und dem Befestigungsschenkel anliegt, stabilisieren der Führungsschenkel und der Befestigungsschenkel den Scheibenadapter zusätzlich.

In einer bevorzugten Ausführung weist der Einführkanal einen trichterförmig ausgebildeten Einführbereich und einen daran angeordneten Endanlagebereich auf, der die Soll-Ausrichtung des Scheibenadapters zum Führungsschlitten definiert. Indem der Einführbereich einen vergleichsweise breiten Einlass aufweist, der sich in Richtung des Endanlagebereichs verjüngt, kann der Führungsschenkel besonders schnell und einfach in den Einführkanal des Scheibenadapters eingeführt werden, da ein eventuell auftretender lateraler Versatz des Führungsschenkels relativ zum Einführkanal durch den trichterförmigen Einführbereich weitestgehend kompensiert wird. Das Erreichen der Soll-Ausrichtung wird indes durch den schmaleren Endanlagebereich gewährleistet.

In einer bevorzugten Ausführung ist die Erhebung des Einführkanals als Führungsrippen ausgebildet. Dadurch lassen sich die Erhebungen möglichst einfach und mit wenig Materialaufwand bereitstellen.

In einer bevorzugten Ausführung wird der Einführkanal aus zwei Führungsrippen gebildet, die jeweils der Aussenkante des Führungsschenkels zugeordnet sind. Indem jeder Aussenkante des Führungsschenkels eine einfache Führungsrippe zugeordnet ist, lässt sich der Einführkanal besonders einfach und kostengünstig bereitstellen.

In einer bevorzugten Ausführung liegen die Führungsrippen im Endanlagebereich formschlüssig an dem Führungsschenkel an. Dadurch wird der Scheibenadapter im Führungsschlitten besonders gut gegen ein Verlassen der Soll-Ausrichtung gesichert.

In einer bevorzugten Ausführung weist der Scheibenadapter eine Fixiereinrichtung zur Aufnahme eines Befestigungsmittels auf. Dadurch lässt sich der Scheibenadapter dauerhaft im Sitz des Führungsschlittens fixieren.

In einer bevorzugten Ausführung ist die Fixiereinrichtung als Durchgangsbohrung im Klemmabschnitt des Scheibenadapters ausgebildet.

In einer bevorzugten Ausführung weist der Befestigungsschenkel eine Durchgangsbohrung auf, die mit der Durchgangsbohrung im Klemmabschnitt des Scheibenadapters korrespondiert, und durch ein stiftförmiges Befestigungsmittel, insbesondere eine Schraube-Mutter-Verbindung, miteinander verbindbar sind. Daraus ergibt sich eine besonders einfache und kostengünstige Möglichkeit, um den Scheibenadapter dauerhaft kraftschlüssig mit dem Führungsschlitten zu verbinden.

In einer bevorzugten Ausführung weist der Befestigungsschenkel einen Befestigungsclip auf, der in die Fixiervorrichtung des Scheibenadapters eingreift. Indem der Befestigungsclip in die Fixiervorrichtung des Scheibenadapters eingreift, erfolgt die dauerhafte Befestigung des Scheibenadapters im Sitz des Führungsschlittens bereits beim Einführen desselbigen.

In einer bevorzugten Ausführung besteht der Scheibenadapter aus einem elastischen Material. Dadurch ergeben sich besonders gute Reibwerte, wodurch die Fensterscheibe fest und sicher im Halteabschnitt des Scheibenadapters sitzt.

In einer bevorzugten Ausführung bestehen die Führungsrippen aus einem nicht-elastischem Material, insbesondere einem Metall. Die relativ hohe Steifigkeit und Festigkeit des nicht-elastischen Materials verleiht den Führungsrippen eine besondere Formstabilität und macht sie widerstandsfähiger gegenüber einer Kraftbeaufschlagung.

In einer bevorzugten Ausführung wird eine Fensterscheibe durch eine Verstellvorrichtung mit zwei in der Ebene der Fensterscheibe parallel angeordneten Mitnehmeranordnungen geführt. Indem die Fensterscheibe von zwei in der Ebene der Fensterscheibe parallel angeordneten Mitnehmeranordnungen geführt wird, verringert sich die Wahrscheinlichkeit des Verkantens der Fensterscheibe in den Führungsschienen des Rahmens.

In einer bevorzugten Ausführung ist die Fensterheberanordnung innerhalb einer Tür des Kraftfahrzeugs angeordnet.

Ein Verfahren zur Herstellung einer Fensterheberanordnung für ein Kraftfahrzeug umfasst folgende Schritte:
Befestigung einer Verstellvorrichtung mit einer Mitnehmeranordnung, umfassend einen Führungsschlitten mit einem Sitz, der aus einem Führungsschenkel und einem gegenüberliegenden Befestigungsschenkel gebildet wird, im Kraftfahrzeug;
Einführen eines Randbereichs einer Fensterscheibe in einen Halteabschnitt eines Scheibenadapters;
Einführen eines, einen Einführkanal aufweisenden, Klemmabschnitts des Scheibenadapters in den Sitz des Führungsschlittens, wobei der Führungsschenkel durch den Einführkanal von einem Einführbereich in einen Endanlagebereich des Scheibenadapters geführt wird;
Verbinden des Scheibenadapters und des Befestigungsschenkels des Führungsschlittens durch ein Befestigungsmittel.

Wird eine erfindungsgemäße Fensterheberanordnung nach dem beschriebenen Verfahren hergestellt, ergeben sich weitere Vorteile. So können die Scheibenadapter bereits an die Fensterscheibe angebracht werden, bevor diese in den Rahmen des Kraftfahrzeugs verbracht wird. Dadurch lassen sich die Scheibenadapter besonders leicht und präzise im Randbereich der Fensterscheibe platzieren. Parallel dazu wird die Verstellvorrichtung mit dem Antrieb und dem Führungsschlitten an den dafür vorgesehenen Stellen im Kraftfahrzeug, insbesondere innerhalb einer Tür, fixiert. Danach wird die Fensterscheibe in den Rahmen der Tür eingebracht. Die Scheibenadapter werden mit ihrem Klemmabschnitt in den Sitz des Führungsschlittens eingeführt, indem die Führungsschenkel in den Einführbereich des jeweiligen Einführkanals verbracht werden. Ein weiteres Zusammenschieben des Scheibenadapters und des Führungsschlittens bewirkt, dass der Führungsschenkel aufgrund der Erhebung von dem Einführbereich in den Endanlagebereich des Einführkanals geführt wird, wodurch die Soll-Ausrichtung des Scheibenadapters relativ zum Führungsschlitten erreicht wird. Die Verbindung des Scheibenadapters mit dem Befestigungsschenkel des Führungsschlittens durch ein Befestigungsmittel sichert die Soll-Ausrichtung zusätzlich und dauerhaft.

### Ausführungsbeispiel

Weitere Einzelheiten, Merkmale und Vorteile der Erfindung ergeben sich aus der nachstehenden Beschreibung eines bevorzugten Ausführungsbeispiels unter Bezugnahme auf die Zeichnungen.

Darin zeigen:
**Fig. 1** eine isometrische Ansicht des Scheibenadapters.
**Fig. 2** eine Ansicht von Scheibenadapter, Führungsschlitten und Fensterscheibe.
**Fig. 3** eine Übersichtsdarstellung der Fensterheberanordnung.

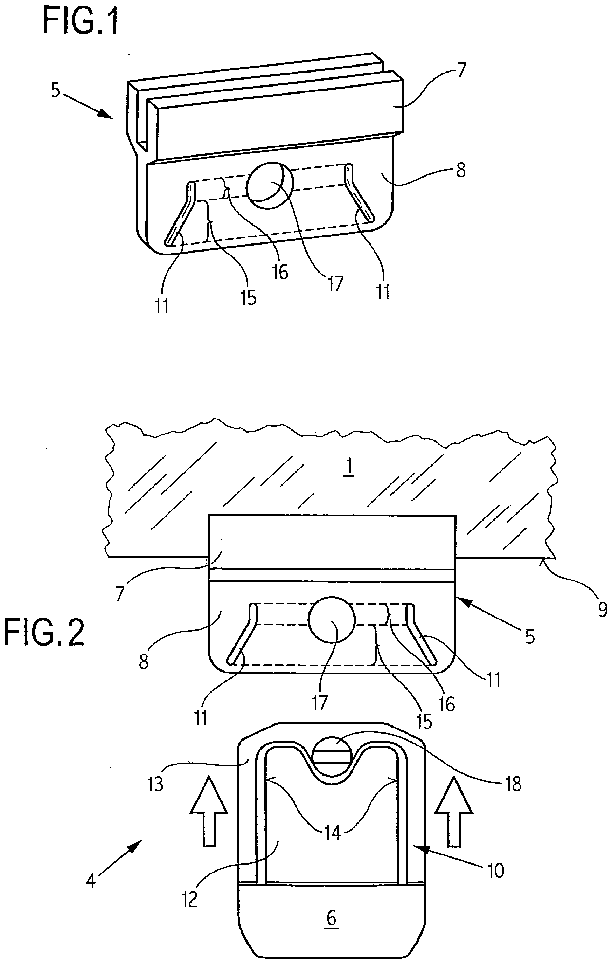

Gemäß **Fig. 1** umfasst ein Scheibenadapter 5 einen u-förmigen Halteabschnitt 7, der mit seiner Form der Fixierung einer Fensterscheibe dient, und einen daran angeordneten flächigen Klemmabschnitt 8. Eine Seite des Klemmabschnitts 8 weist einen Einführkanal 15 und 16 auf, der durch beiderseitige Führungsrippen 11 gebildet wird, und einen trichterförmigen Einführbereich 15, sowie einen rechteckigen Endanlagebereich 16 umfasst. Der Scheibenadapter 5 besteht aus einem elastischem Material, insbesondere einem Gummi, wobei die Führungsrippen 11 aus einem nicht-elastischem Material, insbesondere einem Metall, bestehen. Im Klemmabschnitt 8 des Scheibenadapters 5 ist weiterhin eine Durchgangsbohrung 17 ausgebildet, die mit einem Befestigungsmittel in Eingriff gebracht werden kann.

Gemäß **Fig. 2** umfasst eine Fensterheberanordnung für ein Kraftfahrzeug eine Fensterscheibe 1, in deren Randbereich 9 der u-förmige Halteabschnitt 7 des Scheibenadapters 5 mit einer Kante der Fensterscheibe 1 in Eingriff steht. Der Führungsschlitten 6 hat einen Sitz 10, der sich aus dem Führungsschenkel 12 und dem damit einseitig verbundenen, gegenüberliegenden Befestigungsschenkel 13 ergibt. Der Führungsschenkel 12 ist schmaler und niedriger als der Befestigungsschenkel 13. Am Befestigungsschenkel 13 ist weiterhin ein Befestigungsclip 18 angeordnet, der als eine elastisch gelagerte Erhebung ausgebildet ist und auf der dem Führungsschenkel 12 zugewandten Seite des Befestigungsschenkels 13 angeordnet ist. Der Befestigungsclip 18 weist eine Schräge auf, durch die der Klemmabschnitt 8 des Scheibenadapters 5 den elastisch gelagerten Befestigungsclip 18 beim Einführen in den Sitz 10 auslenken kann. Der Scheibenadapter 5 weist einen Klemmabschnitt 8 auf, der in den Sitz 10 des Führungsschlittens 6 eingeführt werden kann. Dabei bilden die beiden Führungsrippen 11 einen Einführkanal 15 und 16, der den Führungsschenkel 12 von einem Einführbereich 15 in einen Endanlagebereich 16 führt, indem die Aussenkanten 14 des Führungsschenkels 12 mit den Führungsrippen 11 in Anlage kommen und somit den Freiheitsgrad in der Ausrichtung des Scheibenadapters 5 zum Führungsschlitten 6 zunehmend verringern. Hat der Führungsschenkel 12 den Endanlagebereich 16 erreicht, so ist der Freiheitsgrad auf ein Minimum reduziert und die Soll-Ausrichtung von Scheibenadapter 5 zu Führungsschlitten 6 hergestellt. Zudem greift der Befestigungsclip 18 in die Durchgangsbohrung 17 ein und verhindert, dass sich der Scheibenadapter 5 aus dem Sitz 10 des Führungsschlittens 6 lösen kann.

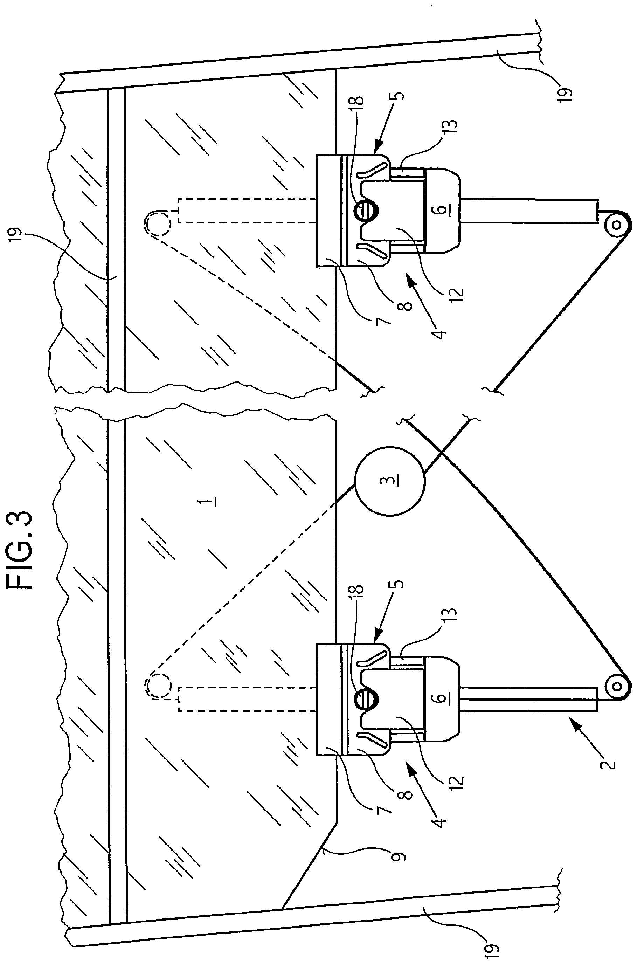

Gemäß **Fig. 3** umfasst eine Fensterheberanordnung für ein Kraftfahrzeug eine verstellbare Fensterscheibe 1, die in den Führungsschienen eines Rahmen 19 geführt ist. Weiterhin ist eine Verstellvorrichtung 2 mit einem Antrieb 3 an der Karosserie des Kraftfahrzeugs, insbesondere innerhalb einer Tür, befestigt. An der Verstellvorrichtung 2 sind zwei Mitnehmeranordnungen 4, jeweils bestehend aus einem Scheibenadapter 5 und einem Führungsschlitten 6, angeordnet. Durch den Antrieb 3 lassen sich die Führungsschlitten 6 der Mitnehmeranordnungen 4 auf definierten Bahnen entlang der Verstellvorrichtung 2 verschieben. Der Scheibenadapter 5 steht mit seinem u-förmigen Halteabschnitt 7 in Eingriff mit einem Randbereich 9 der Fensterscheibe 1. Der Klemmabschnitt 8 des Scheibenadapters 5 ist in einem Sitz 10 des Führungsschlittens 6 angeordnet. Der Sitz 10 des Führungsschlittens 6 besteht aus einem Führungsschenkel 12 und einem gegenüberliegend angeordneten Befestigungsschenkel 13. Der Führungsschenkel 12 steht mit einem Einführkanal des Scheibenadapters 5 in Eingriff, wobei die Soll-Ausrichtung von Scheibenadapter 5 zu Führungsschlitten 6 durch beiderseitig angeordnete Führungsrippen 11 bestimmt wird. Der Befestigungsschenkel 13 trägt ein Befestigungsmittel 18, was mit einer Fixiereinrichtung 17 im Klemmabschnitt 8 des Scheibenadapters 5 in Eingriff steht.

### Liste der Bezugszeichen:

- 1: Fensterscheibe
- 2: Verstellvorrichtung
- 3: Antrieb
- 4: Mitnehmeranordnung
- 5: Scheibenadapter
- 6: Führungsschlitten
- 7: Halteabschnitt
- 8: Klemmabschnitt
- 9: Randbereich der Fensterscheibe
- 10: Sitz
- 11: Führungsrippe
- 12: Führungsschenkel
- 13: Befestigungsschenkel
- 14: Aussenkanten des Führungsschenkels
- 15: Einführbereich
- 16: Endanlagebereich
- 17: Fixiereinrichtung
- 18: Befestigungsmittel
- 19: Führungsschiene des Türrahmens

## Patentansprüche

1. Fensterheberanordnung für ein Kraftfahrzeug, aufweisend eine verstellbare Fensterscheibe (1), eine Verstellvorrichtung (2) mit einem Antrieb (3) und einer Mitnehmeranordnung (4), umfassend einen Scheibenadapter (5) und einen Führungsschlitten (6), wobei der Scheibenadapter (5) einen oberen, u-förmigen Halteabschnitt (7) zur Fixierung der Fensterscheibe (1), sowie einen flächigen unteren Klemmabschnitt (8) aufweist und an einem Randbereich (9) der Fensterscheibe (1) angeordnet ist, und wobei der Führungsschlitten (6) an der Verstellvorrichtung (2) angeordnet ist und einen Sitz (10) aufweist, der mit dem Klemmabschnitt (8) des Scheibenadapters (5) in Eingriff gebracht wird und der sich aus einem Führungsschenkel (12) und dem damit einseitig verbundenen, gegenüberliegenden Befestigungsschenkel (13) ergibt, wobei der Klemmabschnitt (8) einen durch mindestens eine Erhebung (11) gebildeten Einführkanal (15, 16) aufweist und der Führungsschenkel (12) mit seinen Außenkanten (14), im Einführkanal (15, 16) angeordnet ist, wodurch beim Einführen des Klemmabschnitts (8) des Scheibenadapters (5) in den Sitz (10) des Führungsschlittens (6) eine Soll-Ausrichtung des Scheibenadapters (5) zum Führungsschlitten (6) erreicht wird, **dadurch gekennzeichnet, dass** der Klemmabschnitt (8) des Scheibenadapters (5) an dem Führungsschenkel (12) und dem Befestigungsschenkel (13) anliegt.

2. Fensterheberanordnung für ein Kraftfahrzeug nach Anspruch 1, **dadurch gekennzeichnet, dass** der Einführkanal (15, 16) einen trichterförmig ausgebildeten Einführbereich (15) und einen daran angeordneten Endanlagebereich (16) aufweist, der die Soll-Ausrichtung des Scheibenadapters (5) zum Führungsschlitten (6) definiert.

3. Fensterheberanordnung für ein Kraftfahrzeug nach einem der Ansprüche 1 bis 2, **dadurch gekennzeichnet, dass** die Erhebung (11) des Einführkanals (15, 16) als Führungsrippe (11) ausgebildet ist.

4. Fensterheberanordnung für ein Kraftfahrzeug nach einem der Ansprüche 1 bis 3, **dadurch gekennzeichnet, dass** die Erhebung (11) des Einführkanals (15, 16) als zwei Führungsrippen (11) ausgebildet ist, die jeweils der Aussenkante (14) des Führungsschenkels (12) zugeordnet sind.

5. Fensterheberanordnung für ein Kraftfahrzeug nach einem der Ansprüche 1 bis 4, **dadurch gekennzeichnet, dass** die Führungsrippen (11) im Endanlagebereich (16) formschlüssig an dem Führungsschenkel (12) anliegen.

6. Fensterheberanordnung für ein Kraftfahrzeug nach einem der Ansprüche 1 bis 5, **dadurch gekennzeichnet, dass** der Scheibenadapter (5) eine Fixiereinrichtung (17) zur Aufnahme eines Befestigungsmittels (18) aufweist.

7. Fensterheberanordnung für ein Kraftfahrzeug nach Anspruch 6, **dadurch gekennzeichnet, dass** die Fixiereinrichtung (17) als Durchgangsbohrung (17) im Klemmabschnitt (8) des Scheibenadapters (5) ausgebildet ist.

8. Fensterheberanordnung für ein Kraftfahrzeug nach einem der Ansprüche 1 bis 7, **dadurch gekennzeichnet, dass** der Befestigungsschenkel (13) eine Durchgangsbohrung aufweist, die mit der Durchgangsbohrung (17) im Klemmabschnitt (8) des Scheibenadapters (5) derart korrespondiert, dass diese durch ein stiftförmiges Befestigungsmittel, insbesondere eine Schraube-Mutter-Verbindung, miteinander verbindbar sind.

9. Fensterheberanordnung für ein Kraftfahrzeug nach Anspruch 8, **dadurch gekennzeichnet, dass** der Befestigungsschenkel (13) einen Befestigungsclip (18) aufweist, der in die Fixiervorrichtung (17) des Scheibenadapters (5) eingreift.

10. Fensterheberanordnung für ein Kraftfahrzeug nach einem der Ansprüche 1 bis 9, **dadurch gekennzeichnet, dass** der Scheibenadapter (5) aus einem elastischen Material besteht.

11. Fensterheberanordnung für ein Kraftfahrzeug nach einem der Ansprüche 1 bis 10, **dadurch gekennzeichnet, dass** die Führungsrippen (11) aus einem nicht-elastischem Material, insbesondere einem Metall, bestehen.

12. Fensterheberanordnung für ein Kraftfahrzeug nach einem der Ansprüche 1 bis 11, **dadurch gekennzeichnet, dass** eine Fensterscheibe (1) durch eine Verstellvorrichtung (2) mit zwei in der Ebene der Fensterscheibe (1) parallel angeordneten Mitnehmeranordnungen (4) geführt wird.

13. Fensterheberanordnung für ein Kraftfahrzeug nach einem der Ansprüche 1 bis 12, **dadurch gekennzeichnet, dass** die Fensterheberanordnung innerhalb einer Tür des Kraftfahrzeugs angeordnet ist.

14. Verfahren zur Herstellung einer Fensterheberanordnung für ein Kraftfahrzeug nach Anspruch 1 mit den folgenden Schritten:
Befestigung einer Verstellvorrichtung (2) mit einer Mitnehmeranordnung (4), umfassend einen Führungsschlitten (6) mit einem Sitz (10), der aus einem Führungsschenkel (12) und einem gegenüberliegenden Befestigungsschenkel (13) gebildet wird, im Kraftfahrzeug;
Einführen eines Randbereichs einer Fensterscheibe (1) in einen Halteabschnitt (7) eines Scheibenadapters (5);
Einführen eines, einen Einführkanal (15, 16) aufweisenden, Klemmabschnitts (8) des Scheibenadapters (5) in den Sitz (10) des Führungsschlittens (6), wobei der Führungsschenkel (12) durch den Einführkanal (15, 16) von einem Einführbereich (15) in einen Endanlagebereich (16) des Scheibenadapters (5) geführt wird;
Verbinden des Scheibenadapters (5) und des Befestigungsschenkels (13) des Führungsschlittens (6) durch ein Befestigungsmittel (18).

## Claims

1. Window regulator arrangement for a motor vehicle, having an adjustable window pane (1), an adjusting device (2) with a drive (3) and a driver arrangement (4) comprising a pane adapter (5) and a guide carriage (6), wherein the pane adapter (5) has an upper, U-shaped holding section (7) for the fixing of the window pane (1) and a flat lower clamping section (8) and is arranged on an edge region (9) of the window pane (1), and wherein the guide carriage (6) is arranged on the adjusting device (2) and has a seat (10), which is brought into engagement with the clamping section (8) of the pane adapter (5) and which results from a guide limb (12) and the opposite fastening limb (13) connected thereto on one side, wherein the clamping section (8) has an insertion channel (15, 16) formed by at least one elevation (11) and the guide limb (12) is arranged with its outer edges (14) in the insertion channel (15, 16), whereby upon insertion of the clamping section (8) of the pane adapter (5) into the seat (10) of the guide carriage (6), a desired alignment of the pane adapter (5) to the guide carriage (6) is achieved, **characterised in that** the clamping section (8) of the pane adapter (5) abuts the guide limb (12) and the fastening limb (13).

2. Window regulator arrangement for a motor vehicle according to claim 1, **characterised in that** the insertion channel (15, 16) has a funnel-shaped insertion region (15) and an end contact region (16) arranged thereon, which defines the desired alignment of the pane adapter (5) to the guide carriage (6).

3. Window regulator arrangement for a motor vehicle according to any one of claims 1 to 2, **characterised in that** the elevation (11) of the insertion channel (15, 16) is configured as a guide rib (11).

4. Window regulator arrangement for a motor vehicle according to any one of claims 1 to 3, **characterised in that** the elevation (11) of the insertion channel (15, 16) is configured as two guide ribs (11) which are each assigned to the outer edge (14) of the guide limb (12).

5. Window regulator arrangement for a motor vehicle according to any one of claims 1 to 4, **characterised in that** the guide ribs (11) bear positively against the guide limb (12) in the end contact region (16).

6. Window regulator arrangement for a motor vehicle according to any one of claims 1 to 5, **characterised in that** the pane adapter (5) has a fixing apparatus (17) for receiving a fastening means (18).

7. Window regulator arrangement for a motor vehicle according to claim 6, **characterised in that** the fixing apparatus (17) is formed as a through-hole (17) in the clamping section (8) of the pane adapter (5).

8. Window regulator arrangement for a motor vehicle according to any one of claims 1 to 7, **characterised in that** the fastening limb (13) has a through-hole, which corresponds with the through-hole (17) in the clamping section (8) of the pane adapter (5) such that they can be connected to one another by a pin-shaped fastening means, in particular a screw-nut connection.

9. Window regulator arrangement for a motor vehicle according to claim 8, **characterised in that** the fastening limb (13) has a fastening clip (18) which engages in the fixing device (17) of the pane adapter (5).

10. Window regulator arrangement for a motor vehicle according to any one of claims 1 to 9, **characterised in that** the pane adapter (5) is made of an elastic material.

11. Window regulator arrangement for a motor vehicle according to any one of claims 1 to 10, **characterised in that** the guide ribs (11) consist of a non-elastic material, in particular a metal.

12. Window regulator arrangement for a motor vehicle according to any one of claims 1 to 11, **characterised in that** a window pane (1) is guided by an adjusting device (2) with two driver arrangements (4) arranged parallel in the plane of the window pane (1).

13. Window regulator arrangement for a motor vehicle according to any one of claims 1 to 12, **characterised in that** the window regulator arrangement is arranged inside a door of the motor vehicle.

14. Method for the manufacture of a window regulator arrangement for a motor vehicle according to claim 1 comprising the following steps:
Fastening of an adjusting device (2) with a driver arrangement (4), comprising a guide carriage (6) with a seat (10) formed by a guide limb (12) and an opposite fastening limb (13), in the motor vehicle;
Insertion of an edge region of a window pane (1) into a holding section (7) of a pane adapter (5);
Insertion of a clamping section (8) of the pane adapter (5) having an insertion channel (15, 16) into the seat (10) of the guide carriage (6), wherein the guide limb (12) is guided through the insertion channel (15, 16) from an insertion region (15) into an end contact region (16) of the pane adapter (5);
Connection of the pane adapter (5) and the fastening limb (13) of the guide carriage (6) with a fastening means (18).

## Revendications

1. Agencement lève-vitre pour un véhicule automobile, présentant une vitre (1) réglable, un dispositif de réglage (2) avec un entrainement (3) et un agencement entraîneur (4), comprenant un adaptateur de vitre (5) et un chariot de guidage (6), dans lequel l'adaptateur de vitre (5) présente une section de retenue (7) supérieure en forme de U pour la fixation de la vitre (1), ainsi qu'une section de serrage (8) inférieure plate et est agencé au niveau d'une zone de bord (9) de la vitre de fenêtre (1), et dans lequel le chariot de guidage (6) est agencé au niveau du dispositif de réglage (2) et présente un siège (10), qui est mis en prise avec la section de serrage (8) de l'adaptateur de vitre (5) et qui résulte d'une branche de guidage (12) et de la branche de fixation (13) opposée, reliée à celle-ci d'un côté, dans lequel
la section de serrage (8) présente un canal d'introduction (15, 16) formé par au moins un soulèvement (11) et la branche de guidage (12) est agencée avec ses arêtes extérieures (14), dans le canal d'introduction (15, 16), ce par quoi lors de l'introduction de la section de serrage (8) de l'adaptateur de vitre (5) dans le siège (10) du chariot de guidage (6) une orientation de consigne de l'adaptateur de vitre (5) par rapport au chariot de guidage (6) est obtenue, **caractérisé en ce que** la section de serrage (8) de l'adaptateur de vitre (5) s'appuie sur la branche de guidage (12) et la branche de fixation (13).

2. Agencement lève-vitre pour un véhicule automobile selon la revendication 1, **caractérisé en ce que** le canal d'introduction (15, 16) présente une zone d'introduction (15) réalisée en forme d'entonnoir et une zone de position finale (16) qui y est agencée, qui définit l'orientation de consigne de l'adaptateur de vitre (5) par rapport au chariot de guidage (6).

3. Agencement lève-vitre pour un véhicule automobile selon l'une quelconque des revendications 1 à 2, **caractérisé en ce que** le soulèvement (11) du canal d'introduction (15, 16) est réalisé en tant que nervure de guidage (11).

4. Agencement lève-vitre pour un véhicule automobile selon l'une quelconque des revendications 1 à 3, **caractérisé en ce que** le soulèvement (11) du canal d'introduction (15, 16) est réalisé en tant que deux nervures de guidage (11), qui sont associées respectivement à l'arête extérieure (14) de la branche de guidage (12).

5. Agencement lève-vitre pour un véhicule automobile selon l'une quelconque des revendications 1 à 4, **caractérisé en ce que** les nervures de guidage (11) s'appuient dans la zone de position finale (16) par correspondance de forme au niveau de la branche de guidage (12).

6. Agencement lève-vitre pour un véhicule automobile selon l'une quelconque des revendications 1 à 5, **caractérisé en ce que** l'adaptateur de vitre (5) présente un appareil de fixation (17) pour la réception d'un moyen de fixation (18).

7. Agencement lève-vitre pour un véhicule automobile selon la revendication 6, **caractérisé en ce que** l'appareil de fixation (17) est réalisé en tant que perçage traversant (17) dans la section de serrage (8) de l'adaptateur de vitre (5).

8. Agencement lève-vitre pour un véhicule automobile selon l'une quelconque des revendications 1 à 7, **caractérisé en ce que** la branche de fixation (13) présente un perçage traversant, qui correspond au perçage traversant (17) dans la section de serrage (8) de l'adaptateur de vitre (5) de sorte que ceux-ci peuvent être reliés l'un à l'autre par un moyen de fixation en forme de tige, en particulier une liaison vis-écrou.

9. Agencement lève-vitre pour un véhicule automobile selon la revendication 8, **caractérisé en ce que** la branche de fixation (13) présente un clip de fixation (18), qui vient en prise dans le dispositif de fixation (17) de l'adaptateur de vitre (5).

10. Agencement lève-vitre pour un véhicule automobile selon l'une quelconque des revendications 1 à 9, **caractérisé en ce que** l'adaptateur de vitre (5) consiste en un matériau élastique.

11. Agencement lève-vitre pour un véhicule automobile selon l'une quelconque des revendications 1 à 10, **caractérisé en ce que** les nervures de guidage (11) consistent en un matériau non-élastique, en particulier un métal.

12. Agencement lève-vitre pour un véhicule automobile selon l'une quelconque des revendications 1 à 11, **caractérisé en ce qu'**une vitre (1) est guidée par un dispositif de réglage (2) avec deux agencements entraîneurs (4) agencés parallèlement dans le plan de la vitre (1).

13. Agencement lève-vitre pour un véhicule automobile selon l'une quelconque des revendications 1 à 12, **caractérisé en ce que** l'agencement lève-vitre est agencé à l'intérieur d'une porte du véhicule automobile.

14. Procédé de fabrication d'un agencement lève-vitre pour un véhicule automobile selon la revendication 1 avec les étapes suivantes :
fixation d'un dispositif de réglage (2) avec un agencement entraîneur (4), comprenant un chariot de guidage (6) avec un siège (10), qui est formé d'une branche de guidage (12) et d'une branche de fixation (13) opposée, dans le véhicule automobile ;
introduction d'une zone de bord d'une vitre (1) dans une section de retenue (7) d'un adaptateur de vitre (5) ;
introduction d'une section de serrage (8), présentant un canal d'introduction (15, 16), de l'adaptateur de vitre (5) dans le siège (10) du chariot de guidage (6), dans lequel la branche de guidage (12) est guidée par le canal d'introduction (15, 16) d'une zone d'introduction (15) à une zone de position finale (16) de l'adaptateur de vitre (5) ;
liaison de l'adaptateur de vitre (5) et de la branche de fixation (13) du chariot de guidage (6) par un moyen de fixation (18).
